# EUROPEAN PATENT APPLICATION

(11) **EP 4 765 435 A1**
(43) Date of publication of application: **24.06.2026**
(21) Application number: 25845189.7
(22) Date of filing: 07.07.2025
(51) Int. Cl.: H01M 50/502, H01M 50/172, H01M 50/516, H01M 50/507, H01M 50/59, H01M 50/588, H01M 50/204

(54) **BUS BAR, BATTERY MODULE, AND ELECTRONIC DEVICE**

(30) Priority: 24.07.2024 KR 20240098014
(71) Applicant: LG Energy Solution, Ltd., Seoul 07335 (KR)
(72) Inventor: SEON, Sang Ok, Daejeon 34122 (KR); PYUN, So Young, Daejeon 34122 (KR)
(74) Representative: BCKIP Part mbB
(86) International application number: PCT/KR2025/009747
(87) International publication number: WO 2026/023925

(57) **Abstract**

A battery module according to the present disclosure includes a secondary battery including an electrode lead; and a busbar configured to be electrically connected to the electrode lead, wherein the busbar includes a support portion to support the electrode lead such that a contact surface with the electrode lead is parallel to an extension direction of the secondary battery.

## Description

### TECHNICAL FIELD

### CROSS-REFERENCE TO RELATED APPLICATIONS

This application is based on and claims priority from Korean Patent Application No. 10-2024-0098014 filed on July 24, 2024 with the Ministry of Intellectual Property, the disclosure of which is incorporated herein in its entirety by reference.

### TECHNICAL FIELD

The present disclosure relates to a busbar, a battery module and an electronic device. More particularly, the present disclosure relates to a busbar configured to prevent bending of an electrode lead, a battery module including the busbar and an electronic device including the busbar.

### BACKGROUND

With the technology development and growing demand for electric vehicles and mobile devices, the demand for secondary batteries as an energy source is increasing. As opposed to primary batteries that can only be used once, secondary batteries can be recharged and reused.

To manufacture a secondary battery, first, an electrode active material slurry is applied to a positive current collector and a negative current collector to manufacture a positive electrode and a negative electrode, and the positive electrode and the negative electrode are stacked on two sides of a separator to form an electrode assembly. The electrode assembly is housed in a battery case, an electrolyte is injected into the battery case and the battery case is sealed. The electrode assembly is connected to an electrode lead, one end of which is exposed to the outside of the battery case to supply power to the outside. The electrode lead may have a thin metal plate shape.

Because voltage produced by one secondary battery is lower than the required voltage, a plurality of secondary batteries may be connected to form a battery pack or a battery module. In the process of electrically connecting the plurality of secondary batteries, it may be necessary to connect electrode leads. When directly connecting the plurality of electrode leads, because the electrode leads are thin and easily deformed, connecting them may be very difficult. To ease the connection of the plurality of electrode leads, a busbar having a larger thickness than the electrode leads and configured to prevent shape deformation may be provided. The plurality of electrode leads may be welded to the busbar using a laser, and the busbar may be connected to another component that requires electricity.

However, when bending of the electrode lead occurs in the process of connecting the electrode lead to the busbar, the connection between the electrode lead and the busbar may be disconnected due to the electrode lead's tendency to return to its original shape. Further, because bending of the electrode lead is necessary, a space for bending may be required, or the bending may cause interferences between the electrode lead and the surrounding components. Moreover, for the bending of the electrode lead, at least some electrode leads may need to extend beyond the original length, causing a disconnection of the electrode lead. In addition, the bending of the electrode lead requires an additional process, resulting in prolonged process time.

The above-described background is information possessed or acquired by the inventor in the process of deriving the present disclosure, and is not necessarily the prior art published and known to the general public before the time of filing.

### DISCLOSURE

### TECHNICAL PROBLEM

The present disclosure is designed to solve the above-described problems, and therefore the present disclosure is directed to providing a busbar configured to prevent bending of an electrode lead.

The technical problems to be solved by this disclosure are not limited to the aforementioned technical problems, and these and other technical problems will be clearly understood by persons having ordinary skill in the technical field pertaining to the present disclosure from the following description.

### TECHNICAL SOLUTION

A battery module according to an embodiment of the present disclosure includes a secondary battery including an electrode lead; and a busbar configured to be electrically connected to the electrode lead, wherein the busbar includes a support portion to support the electrode lead such that a contact surface with the electrode lead is parallel to an extension direction of the secondary battery.

The electrode lead may be configured to be supported by the support portion in a direction crossing an extension direction of the electrode lead to prevent bending.

The busbar may include an extension portion extending from the support portion in a different direction from an extension direction of the support portion.

The secondary battery may include a battery case including an accommodation portion configured to accommodate an electrode assembly, and the busbar may be located at a side facing the electrode lead with respect to the accommodation portion.

The secondary battery may be provided in pluralor forming a busbar unit such that the electrode leads in the adjacent plurality of secondary batteries are electrically connected, and the busbar unit may be configured such that the plurality of busbars are electrically connected to each other.

The busbar unit may include a first busbar unit and a second busbar unit located adjacent to each other, and the battery module may further include a connection busbar electrically connecting the first busbar unit to the second busbar unit.

The battery module may further include a coupling member that penetrates the plurality of busbars of the busbar unit and couple them together.

The battery module may further include an insulator cover located at a side facing away from the secondary battery with respect to the busbar to support and electrically insulate the busbar.

The secondary battery may be provided in plural, and the insulator cover may be positioned such that a distance to each of the plurality of secondary batteries is constant.

The insulator cover may be coupled to the busbar.

The busbar unit may be provided in plural spaced apart from each other, and the battery module may further include an interference prevention member located between at least some of the plurality of busbar units to electrically insulate them.

The secondary battery may be provided in plural, at least some of the plurality of secondary batteries may be configured so that the adjacent electrode leads contact each other, and at least some of the electrode leads that contact each other may contact the support portion.

The secondary battery may be provided in plural, the support portion may include a plurality of support portions, and the plurality of support portions may be configured to correspond to the electrode lead of each of the plurality of secondary batteries.

The coupling member may penetrate the electrode lead to couple the busbar and the electrode lead.

The support portion may be provided in plural, the battery module may further include an interference prevention member located between at least some adjacent support portions of the plurality of support portions, and an end of the coupling member may be disposed within the interference prevention member.

An electronic device according to an embodiment of the present disclosure includes an electricity production member including an electrode terminal; an insulator cover located such that the insulator cover faces the electrode terminal; and a busbar coupled to the insulator cover and configured to be electrically connected to the electrode terminal, wherein the busbar includes a support portion to support the electrode terminal such that a contact surface with the electrode terminal is parallel to an extension direction of the electricity production member.

The electrode terminal may be configured to be supported by the support portion to prevent bending.

The busbar may include an extension portion extending from the support portion in a different direction from an extension direction of the support portion.

The support portion may be provided in plural spaced apart from each other, and the electronic device may further include an interference prevention member located between at least some of the plurality of support portions to electrically insulate them.

A busbar according to an embodiment of the present disclosure may be configured to be electrically connected to a plurality of electrode leads, and include an extension portion extending in a direction; and a pair of support portions extending from the extension portion in a different direction from the extension direction of the extension portion and spaced apart by a distance corresponding to a distance at which adjacent electrode leads of the plurality of electrode leads are spaced apart so that each of the pair of support portions is connected to each of the adjacent electrode leads.

### ADVANTAGEOUS EFFECTS

The battery module according to an embodiment of the present disclosure may be configured to prevent bending of the electrode lead as it provides the busbar including the support portion to support the electrode lead such that the contact surface with the electrode lead is parallel to the extension direction of the secondary battery.

The battery module according to an embodiment of the present disclosure may prevent leakage current in the busbar as it includes the insulator cover coupled to the busbar.

The battery module according to an embodiment of the present disclosure may insulate the adjacent busbars as it includes the interference prevention member between the adjacent busbars.

The battery module according to an embodiment of the present disclosure may stably connect the plurality of busbars as it includes the coupling member that penetrates the plurality of busbars.

The busbar according to an embodiment of the present disclosure may be coupled to the adjacent electrode leads that are prevented from bending as it includes the pair of support portions spaced apart by the distance corresponding to the distance between the adjacent electrode leads so that each of the support portions may be connected to each of the adjacent electrode leads.

The electronic device according to an embodiment of the present disclosure may obtain the above-described effects as it includes the battery module.

The effects that can be obtained from the present disclosure are not limited to the aforementioned effects, and these and other effects will be clearly understood by persons having ordinary skill in the technical field pertaining to the present disclosure from the following description.

### BRIEF DESCRIPTION OF THE DRAWINGS

FIG. 1 is a perspective view of a battery module according to a first embodiment of the present disclosure.
FIG. 2 is an exploded view of the battery module shown in FIG. 1.
FIG. 3 is a cross-sectional view of a battery module according to a comparative example of the present disclosure.
FIG. 4 is a cross-sectional view of FIG. 1, taken along the line IV-IV'.
FIG. 5 is a perspective view showing an embodiment of the busbar shown in FIG. 4.
FIG. 6 is a cross-sectional view of a battery module according to a second embodiment of the present disclosure.
FIG. 7 is a cross-sectional view of a battery module according to a third embodiment of the present disclosure.
FIG. 8 is a cross-sectional view of a battery module according to a fourth embodiment of the present disclosure.
FIG. 9 is a cross-sectional view of a battery module according to a fifth embodiment of the present disclosure.
FIG. 10 is a cross-sectional view of a battery module according to a sixth embodiment of the present disclosure.
FIG. 11 is a cross-sectional view of a battery module according to a seventh embodiment of the present disclosure.
FIG. 12 is a cross-sectional view of a battery module according to an eighth embodiment of the present disclosure.
FIG. 13 is a cross-sectional view of a battery module according to a ninth embodiment of the present disclosure.
FIG. 14 is an exploded view of a battery pack according to a tenth embodiment of the present disclosure.

### BEST MODE

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B", "at least one of A and B", "at least one of A or B", "A, B or C", "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first", "second" and so on may be simply used to distinguish the corresponding element from the corresponding other embodiment, and are not intended to limit the corresponding elements in another aspect (for example, importance or order).

When a certain (for example, first) element is referred to as being "coupled" or "connected" to another (for example, second) element with or without the term "functionally" or "through communication", the element may be connected to the other element directly (for example, wiredly), wirelessly or through a third element.

The term "comprise", "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to", "being coupled to", "being supported by" or "contacting" another element, this includes not only direct connection, coupling, support or contact of the elements but also indirect connection, coupling, support or contact through a third element.

When an element is referred to as being located "on" another element, the element can contact the other element and intervening elements may be present.

Meanwhile, the terms "top-bottom direction", "lower", and "front-rear direction" as used herein are defined on the basis of the drawings, and the shape and location of each element is not limited by these terms.

Hereinafter, the embodiments according to the present disclosure will be described in detail with reference to the accompanying drawings.

### First embodiment

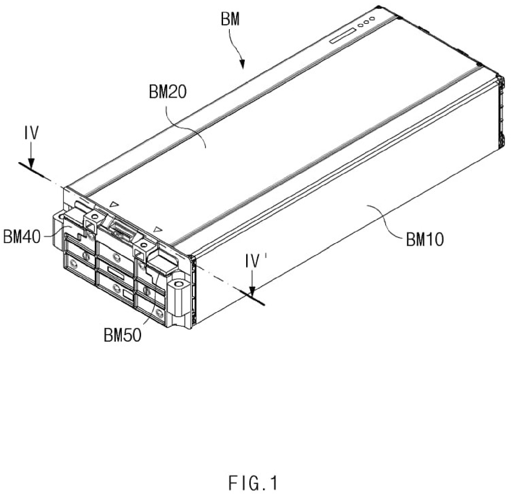

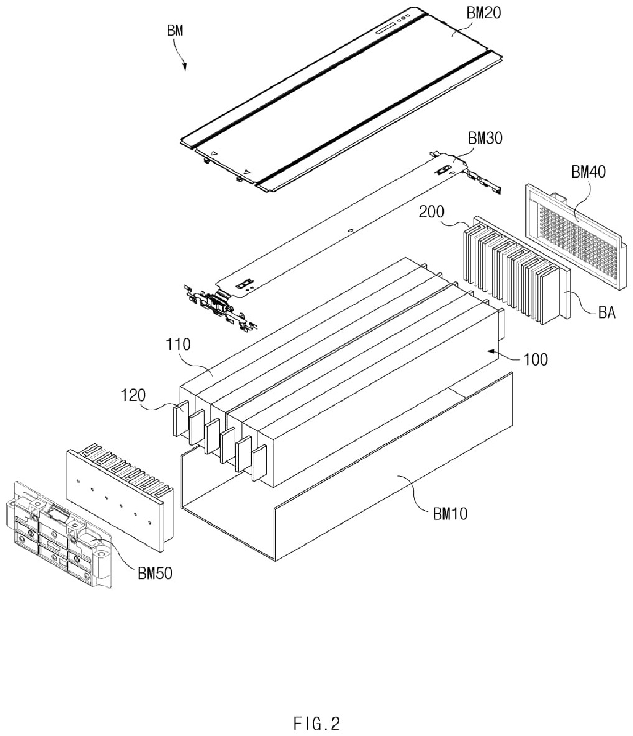

FIG. 1 is a perspective view of a battery module BM according to the first embodiment of the present disclosure. FIG. 2 is an exploded view of the battery module BM shown in FIG. 1.

Referring to FIGS. 1 and 2, the battery module BM according to the first embodiment of the present disclosure will be described.

As shown in FIGS. 1 and 2, a secondary battery 100 may be configured to generate and provide electricity. The secondary battery 100 may include an electrode assembly (not shown) located inside and a battery case 110 configured to accommodate the electrode assembly. The secondary battery 100 may include an electrode lead 120 exposed to the outside to transmit electricity to another component. The electrode lead 120 may include a conductor such as a metal to transmit electricity generated from the secondary battery 100 to the outside. Here, the electrode lead 120 may be understood as a component that transmits electricity generated from the secondary battery 100 to the outside.

One secondary battery 100 may produce a limited voltage. To generate the required voltage, a plurality of secondary batteries 100 may be connected to each other. For example, a higher voltage may be provided by connecting the plurality of secondary batteries 100 in series. As shown in FIG. 2, the plurality of secondary batteries 100 may form the battery module BM.

The battery module BM may include a module case BM10 and a module cover BM20. The module case BM10 and the module cover BM20 may accommodate the plurality of secondary batteries 100. The module case BM10 may include, for example, a lower surface and sides extending upward from two sides of the lower surface as shown in FIG. 2. The module case BM10 may have a top opening, and the module cover BM20 may cover the top of the module case BM10. In other words, the module cover BM20 may cover the opening of the module case BM10.

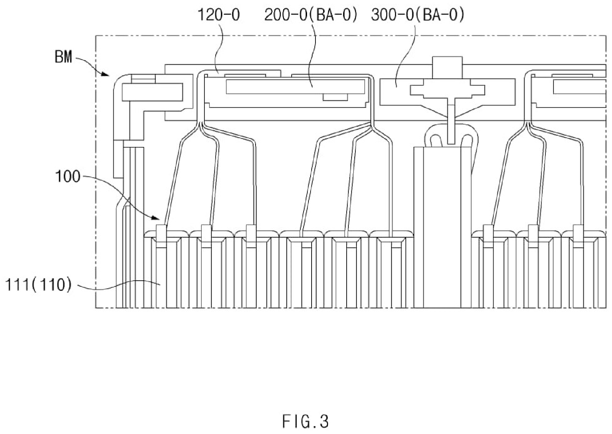

The battery module BM may include a busbar assembly BA to electrically connect the plurality of secondary batteries 100. The plurality of secondary batteries 100 may be connected in series by the busbar assembly BA. The busbar assembly BA will be described in more detail in the description made with reference to FIG. 3 and subsequent drawings.

The battery module BM may include an end plate BM40 to cover the busbar assembly BA. The end plate BM40 may cover the busbar assembly BA to prevent damage to the busbar assembly BA.

The battery module BM may include a substrate BM30 electrically connected to the secondary battery 100. The substrate BM30 may be electrically connected to a battery management system (BMS) (not shown) to provide information associated with the voltage of the secondary battery 100 to the battery management system. The battery management system may check for abnormal operation of the secondary battery 100 based on the information associated with the voltage of the secondary battery 100.

The plurality of secondary batteries 100 may form the battery module BM as described above. The plurality of secondary batteries 100 may be electrically connected to each other by the busbar assembly BA. However, as can be seen from a comparative example below, bending of the electrode lead 120 may occur in the process of electrically connecting the plurality of secondary batteries 100. It will be described in more detail with reference to FIG. 3 below.

FIG. 3 is a cross-sectional view of the battery module BM according to the comparative example of the present disclosure. The cross-sectional view of FIG. 3 shows the battery module BM according to the comparative example, taken along the plane corresponding to the line IV-IV' shown in FIG. 1.

Referring to FIG. 3, the battery module BM according to the comparative example of the present disclosure will be described.

As shown in FIG. 3, the electrode lead 120-0 of the secondary battery 100 included in the battery module BM according to the comparative example may be bent.

The busbar assembly BA-0 according to the comparative example may include a busbar 200-0 configured to be connected to the electrode lead 120-0 and/or a busbar frame 300-0 configured to support the busbar 200-0.

The busbar 200-0 may extend in the left-right direction on the basis of FIG. 3. On the basis of FIG. 3, the busbar frame 300-0 may be located at the lower side of the busbar 200-0 to secure the busbar 200-0. The busbar frame 300-0 may have a hole through which a plurality of electrode leads 120-0 pass. The plurality of electrode leads 120-0 pass through the hole of the busbar frame 300-0 and contact each other, and the electrode leads 120-0 that contact each other may extend and contact the busbar 200-0 at the upper side of the busbar 200-0 on the basis of FIG. 3. The busbar 200-0 and the electrode lead 120-0 may be coupled by laser welding. In this instance, the secondary batteries 100 with the electrode leads 120-0 that contact each other may be defined as a unit. On the basis of the unit of secondary batteries 100 located at the leftmost side shown in FIG. 3, at least some of the electrode leads 120-0 of the secondary batteries 100 included in the unit may be bent. More specifically, the electrode lead 120-0 located adjacent to an accommodation portion 111 of the battery case 110 may extend toward the hole of the busbar frame 300-0 at an angle with respect to the length direction of the accommodation portion 111 of the battery case 110. In the manufactured secondary battery 100, ideally, the electrode lead 120-0 may be substantially parallel to the length direction of the secondary battery 100. However, because it is necessary to insert the electrode lead 120-0 into the hole of the busbar frame 300-0, the electrode lead 120-0 may be inclined and bent. The electrode lead 120-0 passing through the hole of the busbar frame 300-0 may be bent to come into contact with the busbar 200-0. In particular, like the unit of secondary batteries 100 located at the leftmost side shown in FIG. 3, the electrode lead 120-0 may be bent to the right.

The bending of the electrode lead 120-0 may decouple the electrode lead 120-0 from the busbar 200-0 due to the tendency of the electrode lead 120-0 to return to its original shape. Further, because the bending of the electrode lead 120-0 is necessary, a space for bending is required, or the bending may cause interferences between the electrode lead 120-0 and the surrounding components. Moreover, for the bending of the electrode lead 120-0, at least some electrode leads 120-0 may need to extend beyond the original length, and in this process, disconnection of the electrode lead 120-0 may occur. To prevent this, the battery module BM according to an embodiment of the present disclosure may prevent bending of the electrode lead 120-0. In addition, the bending of the electrode lead 120-0 requires an additional process, resulting in prolonged process time. Hereinafter, the battery module BM according to an embodiment of the present disclosure will be described in detail.

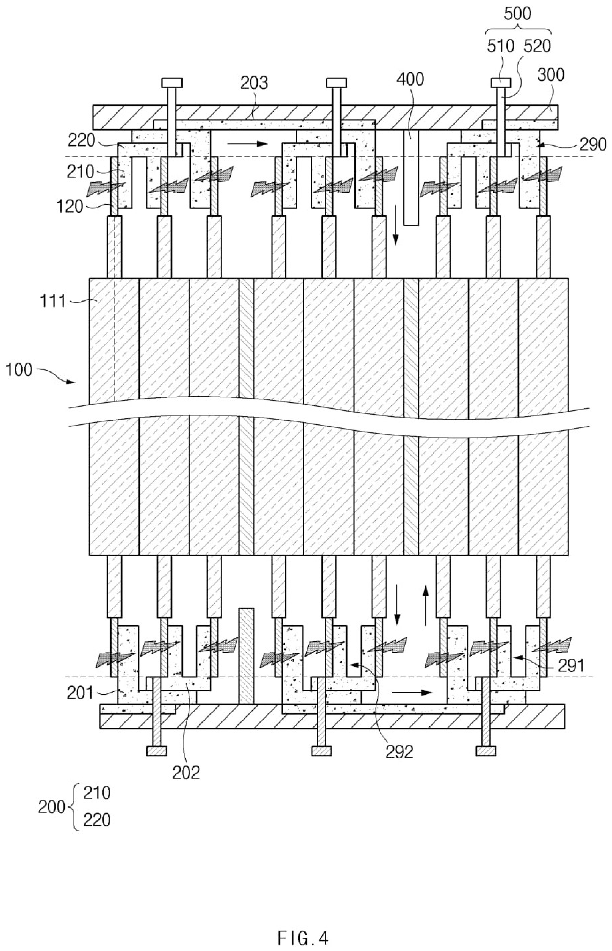

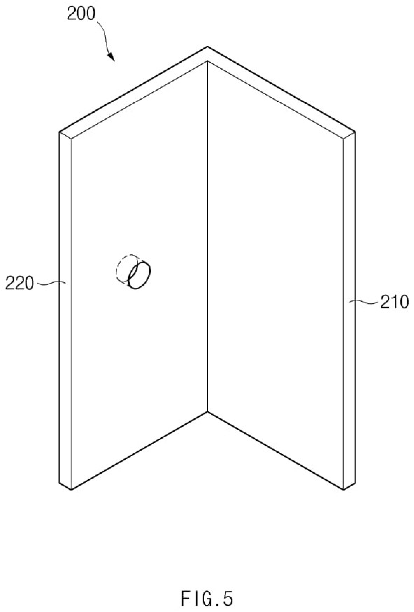

FIG. 4 is a cross-sectional view of FIG. 1, taken along the line IV-IV'. FIG. 5 is a perspective view showing an embodiment of the busbar 200 shown in FIG. 4.

Referring to FIGS. 4 and 5, the busbar assembly BA according to the first embodiment of the present disclosure will be described in detail.

As described above, the battery module BM may include the plurality of secondary batteries 100 including the electrode leads 120 and the busbar assembly BA connecting the plurality of secondary batteries 100 to each other. The busbar assembly BA may include a plurality of busbars 200 configured to be electrically connected to the electrode leads 120. Further, the busbar assembly BA may further include a coupling member 500 coupling the plurality of busbars 200, an insulator cover 300 coupled to the busbars 200 and/or an interference prevention member 400 configured to prevent electricity conduction between the adjacent busbars 200.

First, a relationship between the busbar 200 and the electrode lead 120 will be described. The busbar 200 may be configured to prevent bending of the electrode lead 120. When the secondary battery 100 includes the battery case 110 including the accommodation portion 111 configured to accommodate the electrode assembly, the busbar 200 may be located at a side facing the electrode lead 120 with respect to the accommodation portion 111. The busbar 200 may include a first busbar 201 and a second busbar 202 as shown in FIG. 4. Hereinafter, features that are shared between the first busbar 201 and the second busbar 202 will first be described.

The busbar 200 may include a support portion 210 to support the electrode lead 120. Further, the busbar 200 may include an extension portion 220 connected to the support portion 210 to support the support portion 210. On the basis of FIG. 4, the support portion 210 may extend in the top-bottom direction, and the extension portion 220 may extend in the left-right direction. The support portion 210 may extend along the extension direction of the electrode lead 120 to support the side of the electrode lead 120. Accordingly, the electrode lead 120 may contact the support portion 210 without needing to bend. When comparing with the comparative example shown in FIG. 3, the electrode lead 120 shown in FIG. 4 does not need to be directed towards the hole of the busbar frame 300-0 and bent toward the busbar 200, and may maintain the direction in which the electrode lead 120 is originally directed.

In other words, the support portion 210 may be positioned such that the contact surface with the electrode lead 120 is parallel to the extension direction of the secondary battery 100. The support portion 210 may support the electrode lead 120 to prevent bending of the electrode lead 120. Here, the extension direction of the secondary battery 100 may be the top-bottom direction as shown in FIG. 4. Although the extension direction of the secondary battery 100 is depicted as the top-bottom direction in FIG. 4, referring to FIG. 2, the extension direction of the secondary battery 100 may be the front-back direction. Before the battery module BM is formed, the electrode lead 120 may extend parallel to the extension direction of the secondary battery 100. The busbar 200 may contact the side of the electrode lead 120 without changing the extension direction of the electrode lead 120. When the busbar 200 contacts the side of the electrode lead 120, the contact surface of the busbar 200 and the electrode lead 120 may be parallel to the extension direction of the secondary battery 100 which is the original extension direction of the electrode lead 120. Here, the extension direction of the contact surface is shown as the top-bottom direction in FIG. 4, and matches the top-bottom direction which is the extension direction of the secondary battery 100, but is not necessarily limited thereto, and the extension direction of the contact surface according to the aspects of the present disclosure may include a direction having a predetermined angle to the top-bottom direction and a direction at which the bending angle of the electrode lead 120 is not steep, but excludes the vertical direction such as the left-right direction.

Further, because the electrode lead 120 is supported by the busbar 200 and prevented from bending toward the side, the busbar 200 may prevent bending of the electrode lead 120. In other words, the electrode lead 120 may be configured to be supported by the support portion 210 in a direction crossing the extension direction of the electrode lead 120 to prevent bending.

The electrode lead 120 and the busbar 200 may be coupled together. For example, the electrode lead 120 and the busbar 200 may be coupled by laser welding. The extension direction of the coupling member 500 as described below may be parallel to the extension direction of the electrode lead 120, making it difficult for the coupling member 500 to penetrate the electrode lead 120, and the electrode lead 120 and the busbar 200 may be coupled by a coupling method that does not use the coupling member 500.

Because the busbar 200 is not located at the outside of the busbar frame 300-0 of the comparative example, the electrode lead 120 may not be bent. The busbar 200 according to the first embodiment may be located at the side of the insulator cover 300 facing the secondary battery 100, wherein the insulator cover 300 corresponds to the busbar frame 300-0 in the comparative example. Accordingly, the electrode lead 120 may not need to penetrate the insulator cover 300 and be bent.

Further, the support portion 210 may include a plurality of support portions, and each of the plurality of support portions 210 may correspond to the electrode lead 120 of each of the plurality of secondary batteries 100. In the description of the first embodiment, the plurality of busbars 200 have one or more support portions 210, but the aspects of the present disclosure are not limited thereto, and one busbar 200 may have the support portion 210 corresponding to all the electrode leads 120.

The busbar 200 may include the extension portion 220 extending from the support portion 210 in a different direction from the extension direction of the support portion 210 as shown in FIGS. 4 and 5. More specifically, the extension portion 220 may extend in a direction perpendicular to the extension direction of the support portion 210. Accordingly, when the extension portion 220 contacts the insulator cover 300, the support portion 210 may extend along the extension direction of the electrode lead 120.

The busbar 200 may have a hole through which the coupling member 500 passes as shown in FIG. 5. It will be described in more detail in the description of the coupling member 500.

The busbar 200 may include the first busbar 201 and the second busbar 202. However, the busbar 200 according to the aspects of the present disclosure may include the plurality of components, but may be formed as a single piece. The description of the first embodiment is made under the assumption that the busbar 200 includes the plurality of components.

Referring back to FIG. 4, the first busbar 201 may be configured to be coupled to one electrode lead 120. The second busbar 202 may be configured to be coupled to a plurality of electrode leads 120. However, the first busbar 201 and the second busbar 202 according to the aspects of the present disclosure are not limited thereto, and may be any separate components. More specifically, the first busbar 201 may include one support portion 210 extending from one extension portion 220. In this instance, the support portion 210 of the first busbar 201 may extend from the end of the extension portion 220. The second busbar 202 may include a plurality of support portions 210 extending from one extension portion 220. In this instance, any of the support portions 210 of the second busbar 202 may extend from the end of the extension portion 220, and the other may extend from a location apart from the end of the extension portion 220. When the support portion 210 extends from the end of the extension portion 220, the space unnecessarily occupied by the extension portion 220 within the battery module BM may be reduced.

In particular, the second busbar 202 is the busbar 200 configured to be electrically connected to the plurality of electrode leads 120, and may include the extension portion 220 extending in a direction and a pair of support portions 210 extending from the extension portion 220 in a different direction from the extension direction of the extension portion 220 and spaced apart from each other by a distance corresponding to the distance between the adjacent electrode leads 120 of the plurality of electrode leads 120 so that each of the pair of support portions 210 is connected to each of the adjacent electrode leads 120. Accordingly, the pair of electrode leads 120 connected to the second busbars 202 may contact the second busbars 202 while preventing bending of each electrode lead 120.

The first busbar 201 and the second busbar 202 may form a busbar unit 290. As mentioned above, some adjacent secondary batteries of the plurality of secondary batteries 100 may be defined as a unit. The unit of secondary batteries 100 may be coupled to one busbar unit 290. In other words, the secondary battery 100 may include a plurality of secondary batteries, and the busbar 200 may include a plurality of busbars to form the busbar unit 290 to electrically connect the electrode leads 120 of the adjacent secondary batteries of the plurality of secondary batteries 100. The busbar unit 290 may be configured such that the plurality of busbars 200 are electrically connected to each other. The plurality of busbars 200, i.e., the first busbar 201 and the second busbar 202 may be coupled to each other. The extension portion 220 of the first busbar 201 may be coupled to the extension portion 220 of the second busbar 202.

The busbar unit 290 includes a first busbar unit 291 and a second busbar unit 291 located adjacent to each other. The busbar unit 290 may further include a connection busbar 203 electrically connecting the first busbar unit 291 to the second busbar unit 292. The connection busbar 203 may extend along the placement direction of the first busbar unit 291 and the second busbar unit 292. For example, as shown in FIG. 4, the connection busbar 203 may extend in the left-right direction.

The connection busbar 203 may be positioned in an alternating manner at the electrode lead 120 side corresponding to the positive electrode of the secondary battery 100 and the electrode lead 120 side corresponding to the negative electrode. In other words, in the secondary battery 100 shown in FIG. 4, for example, the electrode lead 120 located at the upper side may be positive and the electrode lead 120 located at the lower side may be negative. Three busbar units 290 connecting the electrode leads 120 located at the upper side are shown. The connection busbar 203 located at the upper side may connect the busbar units 290 located at the right side among the upper busbar units 290. The connection busbar 203 located at the lower side may connect the busbar units 290 located at the left side among the lower busbar units 290. Accordingly, an electrical flow may be formed as indicated by the arrow shown in FIG. 4. Because the plurality of secondary batteries 100 form the battery module BM to increase the voltage, it may be necessary to connect them in series. The busbar unit 290 may increase the voltage of the plurality of secondary batteries 100 by connecting the plurality of secondary batteries 100 in series.

The connection busbar 203 may be coupled to the insulator cover 300. The connection busbar 203 may extend along the length direction of the insulator cover 300 so as to be supported by the insulator cover 300. Further, the connection busbar 203 may be inserted into the insulator cover 300, thereby preventing the extension portion 220 of the busbar 200 from being coupled to the insulator cover 300 at an angle with respect to the left-right direction.

The busbar assembly BA may further include the coupling member 500 that penetrates to couple the plurality of busbars 200 of the busbar unit 290. That is, the coupling member 500 may penetrate to couple the first busbar 201 to the second busbar 202. However, the coupling member 500 according to the aspects of the present disclosure is not limited to coupling the first busbar 201 to the second busbar 202 by penetrating them, and may include coupling the first busbar 201 to the second busbar 202 by adhesion or welding. However, the description of the first embodiment is made under the assumption that the coupling member 500 penetrates the first busbar 201 and the second busbar 202. The coupling member 500 may penetrate to couple the extension portion 220 of the first busbar 201 to the extension portion 220 of the second busbar 202. As shown in FIG. 4, the coupling member 500 may include a bolt 520 that penetrates the first busbar 201 and the second busbar 202 and a nut 510 fastened to the bolt 520 to prevent separation of the bolt 520.

Further, the coupling member 500 may penetrate the connection busbar 203 and/or the insulator cover 300. In this instance, because the insulator cover 300 secures the first busbar 201, the second busbar 202 and/or the connection busbar 203 with the coupling member 500, the insulator cover 300 may have sufficient rigidity to prevent the coupling by the coupling member 500 from being decoupled. To this end, the insulator cover 300 may have a sufficient thickness.

The insulator cover 300 may be coupled to the busbar 200. The insulator cover 300 and the busbar 200 may be coupled by the coupling member 500 as mentioned above. The insulator cover 300 may be located at a side facing away from the secondary battery 100 with respect to the busbar 200 to support and electrically insulate the busbar 200. The insulator cover 300 may include, for example, Modified Polyphenylene Oxide (MPPO) including glass fibers. Because electricity moving from the electrode lead 120 flows in the busbar 200, to prevent leakage current through the busbar 200, the insulator cover 300 may cover the busbar 200 at the outside of the busbar 200 to prevent contact between the busbar 200 and an external device.

In this instance, the insulator cover 300 may be positioned such that a distance to each of the plurality of secondary batteries 100 is constant. As mentioned above, because there is no need to extend the electrode lead 120 of the first embodiment for the purpose of coupling with the busbar 200, the electrode lead 120 of each of the plurality of secondary batteries 100 included in the battery module BM may have the same length. Accordingly, the length from the insulator cover 300 to the end of each electrode lead 120 may be constant.

The busbar assembly BA may include a plurality of busbar units 290 spaced apart from each other, and further include an interference prevention member 400 located between at least some of the plurality of busbar units 290 to electrically insulate them. The interference prevention member 400 may be located between the adjacent busbar units 290 where the connection busbar 203 is not located. As mentioned above, the connection busbar 203 may be configured to connect the plurality of secondary batteries 100 in series. In this instance, it may be desirable to prevent electricity conduction between the adjacent busbar units 290 not connected with the connection busbar 203. When the adjacent busbar units 290 not connected with the connection busbar 203 are electrically connected to each other, a loop circuit may be formed at the corresponding location, causing a short circuit. To prevent this, it may be desirable to prevent electricity conduction between the adjacent busbar units 290 not connected with the connection busbar 203. The interference prevention member 400 may prevent contact between the adjacent busbar units 290, thereby preventing unintended electricity conduction between the adjacent busbar units 290.

The interference prevention member 400 may extend along the extension direction of the electrode lead 120. More specifically, the interference prevention member 400 may extend in the top-bottom direction as shown in FIG. 4. The interference prevention member 400 may extend from the insulator cover 300. If necessary, the interference prevention member 400 may be formed integrally with the insulator cover 300.

The secondary battery 100 in the first embodiment may have the electrode lead 120 extending from the center of the accommodation portion 111 in the thickness direction. More specifically, the secondary battery 100 in the first embodiment may have a pair of accommodation portions 111, and the pair of accommodation portions 111 may contact each other, facing each other. Accordingly, because the electrode lead 120 is located between the pair of accommodation portions 111, the electrode lead 120 may extend from the center of the pair of accommodation portions 111 in the thickness direction. When the plurality of secondary batteries 100 according to the first embodiment are placed in a direction, the plurality of electrode leads 120 may be arranged at a regular interval.

In addition, the battery module BM may include a compression pad 101 positioned between the adjacent secondary batteries 100 of the plurality of secondary batteries 100. The compression pad 101 may prevent shape deformation caused by thermal runaway of the secondary battery 100. When considering the compression pad 101, the interval of the plurality of electrode leads 120 may temporarily change at a location corresponding to the compression pad 101, and the plurality of remaining electrode leads 120 may be arranged at a regular interval.

Hereinafter, different embodiments from the first embodiment will be described. The description that is shared between the first embodiment and the other embodiments is omitted, and the other embodiments will be described based on differences. In other words, obviously, necessary details not described in the other embodiments may be compensated for through the description of the first embodiment.

### Second embodiment

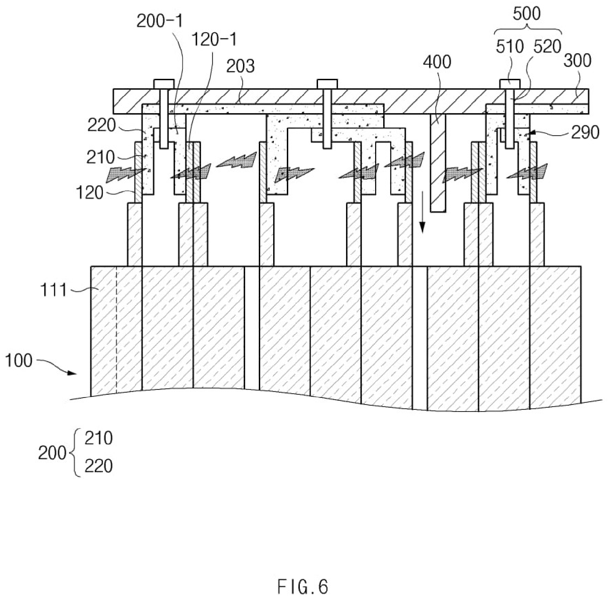

FIG. 6 is a cross-sectional view of the battery module BM according to the second embodiment of the present disclosure.

Referring to FIG. 6, the battery module BM according to the second embodiment of the present disclosure will be described.

The second embodiment is different from the first embodiment in that the electrode lead 120-1 of the secondary battery 100 extends from the edge of the accommodation portion 111.

When the plurality of secondary batteries 100 in the second embodiment are arranged in a line, certain adjacent secondary batteries 100 may have the electrode leads 120-1 not spaced apart from each other. In this case, at least some of the plurality of secondary batteries 100 may be configured such that the adjacent electrode leads 120-1 contact each other. At least some of the electrode leads 120-1 that contact each other may contact the support portion 210 of the busbar 200-1.

### Third embodiment

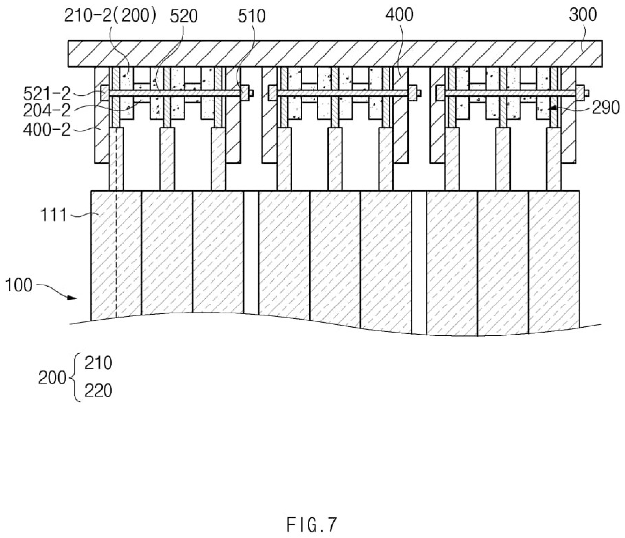

FIG. 7 is a cross-sectional view of the battery module BM according to the third embodiment of the present disclosure.

Referring to FIG. 7, the battery module BM according to the third embodiment of the present disclosure will be described.

The third embodiment is different from the first embodiment in that the busbar 200 is coupled to the electrode lead 120 by the coupling member 500.

In the third embodiment, the busbar 200 and the electrode lead 120 may be coupled by the coupling member 500, not laser welding. However, if necessary, the busbar 200 and the electrode lead 120 may be welded using a laser and coupled by the coupling member 500.

In this instance, the busbar 200 may include only the support portion 210-2 and may not include the extension portion 220.

A spacer 204-2 may be coupled between the adjacent support portions 210-2. The spacer 204-2 may maintain the distance between the support portions 210-2 to prevent the adjacent electrode leads 120 from bending toward each other. In other words, the spacer 204-2 may support the support portions 210-2 so that the support portions 210-2 may support the electrode leads 120.

The interference prevention member 400-2 may contact the electrode lead 120. Accordingly, the electrode lead 120 may be supported by the support portion 210 at one side and supported by the interference prevention member 400-2 at the other side, thereby preventing from bending. The interference prevention member 400-2 may support the electrode lead 120 at the outside of the unit of secondary batteries 100.

In this instance, the coupling member 500 may penetrate the electrode lead 120 to couple the busbar 200 to the electrode lead 120. In other words, the coupling member 500 may penetrate to couple the busbar 200, the spacer 204-2, the interference prevention member 400-2 and/or the electrode lead 120 that form a unit with the electrode leads 120 of the unit of secondary batteries 100. More specifically, the interference prevention member 400-2-the electrode lead 120-the busbar 200-the spacer 204-2-the busbar 200-the electrode lead 120-the busbar 200-the spacer 204-2-the busbar 200-the electrode lead 120-the interference prevention member 400-2 may be arranged in that order, and the bolt 520 may penetrate them.

The bolt 520 of the coupling member 500 may have a bolt head 521-2. At least a part of the bolt head 521-2 may be disposed within the interference prevention member 400, thereby reducing the space occupied within the battery module BM. To this end, the interference prevention member 400 may be formed in the bolt head 521-2 by double injection molding. The nut 510 may be located at the outside of the interference prevention member 400 to secure the bolt 520.

### Fourth embodiment

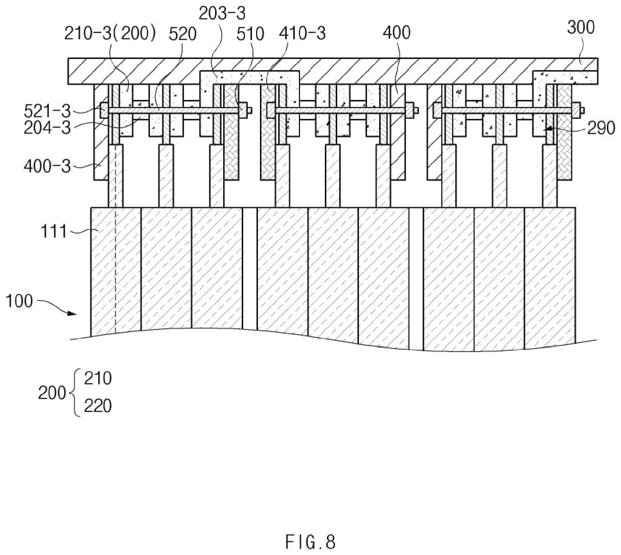

FIG. 8 is a cross-sectional view of the battery module BM according to the fourth embodiment of the present disclosure.

Referring to FIG. 8, the battery module BM according to the fourth embodiment of the present disclosure will be described.

The fourth embodiment is different from the third embodiment in that the battery module BM further includes an insulating washer 410-3 and a connection busbar 203-3.

The interference prevention member 400-3 that contacts the nut 510 may be replaced with the insulating washer 410-3. The insulating washer 410-3 may enhance the coupling of the bolt 520 and the nut 510.

Further, when connection between the electrode leads 120 of adjacent units of secondary batteries 100 is necessary, the connection busbar 203-3 may be used. In this instance, the connection busbar 203-3 may integrally extend from the support portion 210-3 of the busbar 200 as shown in FIG. 8.

### Fifth embodiment

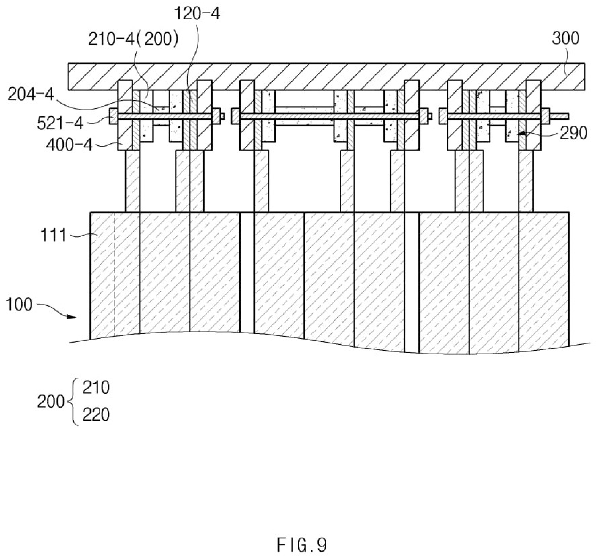

FIG. 9 is a cross-sectional view of the battery module BM according to the fifth embodiment of the present disclosure.

Referring to FIG. 9, the battery module BM according to the fifth embodiment of the present disclosure will be described.

The fifth embodiment relates to the battery module BM in which the busbar 200 of the third embodiment is connected to the secondary battery 100 having the electrode lead 120-4 extending from the edge of the accommodation portion 111 like the second embodiment.

Its detailed description is replaced with the description of the spacer 204-4, the busbar 200 and the bolt 520 including the bolt head 521-4 corresponding to the third embodiment, and the description of the electrode lead 120-4 corresponding to the second embodiment.

### Sixth embodiment

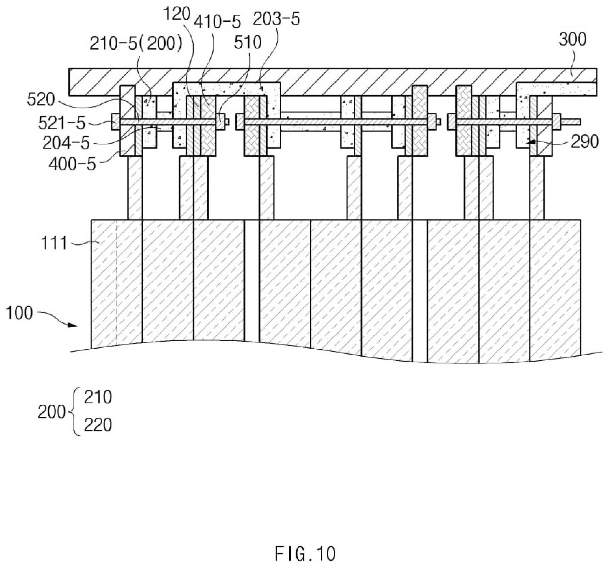

FIG. 10 is a cross-sectional view of the battery module BM according to the sixth embodiment of the present disclosure.

Referring to FIG. 10, the battery module BM according to the sixth embodiment of the present disclosure will be described.

The sixth embodiment relates to the battery module BM in which the busbar 200 and/or the connection busbar 203-5 of the fourth embodiment is connected to the secondary battery 100 having the electrode lead 120-5 extending from the edge of the accommodation portion 111 like the second embodiment.

Its detailed description is replaced with the description of the spacer 204-5, the busbar 200 including the support portion 210-5, the bolt 520 including the bolt head 521-5, the insulating washer 410-5 and the connection busbar 203-5 corresponding to the fourth embodiment, and the description of the electrode lead 120-5 corresponding to the second embodiment.

### Seventh embodiment

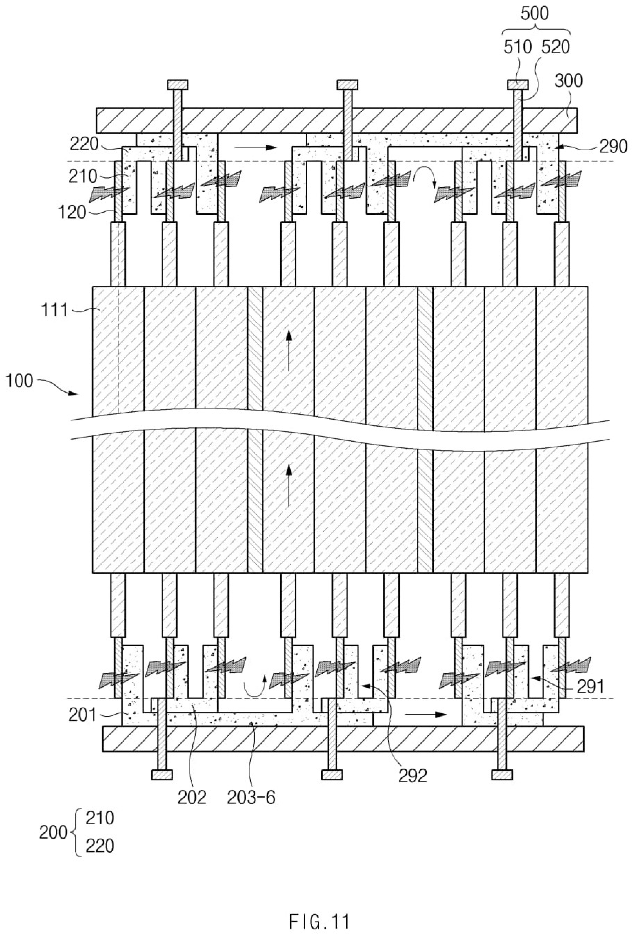

FIG. 11 is a cross-sectional view of the battery module BM according to the seventh embodiment of the present disclosure.

Referring to FIG. 11, the battery module BM according to the seventh embodiment of the present disclosure will be described.

The seventh embodiment is different from the first embodiment in that the connection busbar 203-6 is integrally formed with the busbar 200.

### Eighth embodiment

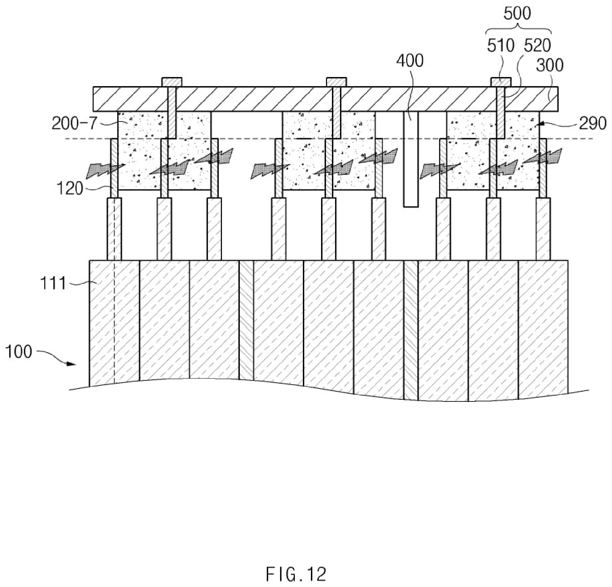

FIG. 12 is a cross-sectional view of the battery module BM according to the eighth embodiment of the present disclosure.

Referring to FIG. 12, the battery module BM according to the eighth embodiment of the present disclosure will be described.

The eighth embodiment is different from the first embodiment in that the support portion 210 is not formed by bending the busbar 200-7.

### Ninth embodiment

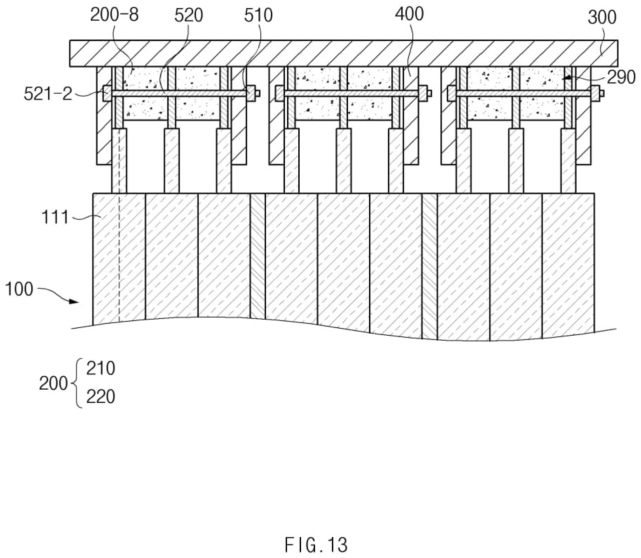

FIG. 13 is a cross-sectional view of the battery module BM according to the ninth embodiment of the present disclosure.

Referring to FIG. 13, the battery module BM according to the ninth embodiment of the present disclosure will be described.

The ninth embodiment is different from the third embodiment in that the spacer 204-2 is absent and the busbar 200-8 having a larger thickness supports all the adjacent electrode leads 120.

### Tenth embodiment

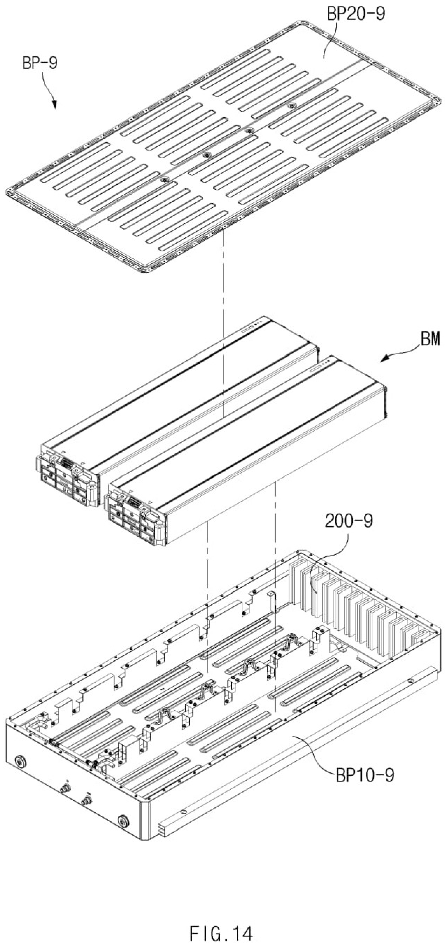

FIG. 14 is an exploded view of the battery pack BP-9 according to the tenth embodiment of the present disclosure.

Referring to FIG. 14, the battery pack BP-9 according to the tenth embodiment of the present disclosure will be described.

The tenth embodiment is different in that the busbar 200 is not connected to the secondary battery 100 and the busbar 200 is connected to the battery module BM.

The battery pack BP-9 may accommodate the battery module BM. More specifically, the battery pack BP-9 may include a pack case BP10-9 accommodating the battery module BM and have an opening, and a pack cover BP20-9 configured to cover the opening of the pack case BP10-9.

The battery module BM may include an end busbar BM50, and the busbar 200 may be connected to the end busbar BM50. A relationship of the busbar 200 and the end busbar BM50 may correspond to the relationship of the busbar 200 and the electrode lead 120 in the first embodiment.

In this instance, the electrode terminal 120, BM50 may be defined as a concept including the electrode lead 120 and the end busbar BM50. The electricity production member 100, BM may be defined as a concept including the secondary battery 100 and the battery module BM. Further, an electronic device may be defined as a concept including the battery module BM and the battery pack BP-9. Although the embodiments described with reference to the above drawings describe that the secondary batteries 100 form the battery module BM and the battery modules BM form the battery pack BP-9, the above concepts may be applied to a cell to pack in which the secondary batteries 100 directly form the battery pack BP-9. When using these definitions, the present disclosure may be defined as follows.

The electronic device may include the electricity production member 100, BM including the electrode terminal 120, BM50 and the busbar 200-9 configured to be electrically connected to the electrode terminal 120, BM50. The busbar 200-9 may include the support portion 210 to support the electrode terminal 120, BM50 such that the contact surface with the electrode terminal 120, BM50 is parallel to the extension direction of the electricity production member 100, BM.

In this instance, the insulator cover 300 may be located such that it faces the electrode terminal 120, BM50. The busbar 200-9 may be coupled to the insulator cover 300.

The electrode terminal 120, BM50 may be configured to be supported by the support portion 210 to prevent bending.

The busbar 200-9 may include the extension portion 220 extending from the support portion 210 in a different direction from the extension direction of the support portion 210.

The support portion 210 may include a plurality of support portions 210 spaced apart from each other and the bus bar may further include the interference prevention member 400 located between at least some of the plurality of support portions 210 to electrically insulate them.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to a limited number of embodiments and drawings, the present disclosure is not limited thereto, and the present disclosure may be embodied in many different forms by persons having ordinary skill in the technical field pertaining to the present disclosure within the technical scope of the present disclosure and the appended claims and their equivalents.

### [List of Reference Numerals]

100: Secondary battery
100, BM: Electricity production member
110: Battery case
111: Accommodation portion
120, 120-0, 120-1, 120-4: Electrode lead
120, BM50: Electrode terminal
101: Compression pad
BP-9: Battery pack
BP10-9: Pack case
BP20-9: Pack cover
BM: Battery module
BM10: Module case
BM20: Module cover
BM30: Substrate
BM40: End plate
BM50: End busbar
BA, BA-0: Busbar assembly
200, 200-0, 200-1, 200-7, 200-8, 200-9: Busbar
201: First busbar
202: Second busbar
203, 203-3, 203-5, 203-6: Connection busbar
204-2, 204-3, 204-4, 204-5: Spacer
210, 210-2, 210-3, 210-4, 210-5: Support portion
220: Extension portion
290: Busbar unit
291: First busbar unit
292: Second busbar Unit
300: Insulator cover
300-0: Busbar frame
400, 400-2, 400-3, 400-4, 400-5: Interference prevention member
410-3, 410-5: Insulating washer
500: Coupling member
510: Nut
520: Bolt
521-2, 521-3, 521-4, 521-5: Bolt head

## Claims

1. A battery module comprising:
a secondary battery including an electrode lead; and
a busbar configured to be electrically connected to the electrode lead,
wherein the busbar includes a support portion to support the electrode lead such that a contact surface with the electrode lead is parallel to an extension direction of the secondary battery.

2. The battery module according to claim 1,
wherein the electrode lead is configured to be supported by the support portion in a direction crossing an extension direction of the electrode lead to prevent bending.

3. The battery module according to claim 1,
wherein the busbar includes an extension portion extending from the support portion in a different direction from an extension direction of the support portion.

4. The battery module according to claim 1,
wherein the secondary battery includes a battery case including an accommodation portion configured to accommodate an electrode assembly, and
wherein the busbar is located at a side facing the electrode lead with respect to the accommodation portion.

5. The battery module according to claim 1,
wherein the secondary battery is provided in plural,
wherein the busbar is provided in plural for forming a busbar unit such that the electrode leads in the adjacent plurality of secondary batteries are electrically connected, and
wherein the busbar unit is configured such that the plurality of busbars are electrically connected to each other.

6. The battery module according to claim 5,
wherein the busbar unit includes a first busbar unit and a second busbar unit located adjacent to each other, and
wherein the battery module further includes a connection busbar electrically connecting the first busbar unit to the second busbar unit.

7. The battery module according to claim 5, further comprising:
a coupling member that penetrates the plurality of busbars of the busbar unit to couple them together.

8. The battery module according to claim 1, further comprising:
an insulator cover located at a side facing away from the secondary battery with respect to the busbar to support and electrically insulate the busbar.

9. The battery module according to claim 8,
wherein the secondary battery is provided in plural, and
wherein the insulator cover is positioned such that a distance to each of the plurality of secondary batteries is constant.

10. The battery module according to claim 8,
wherein the insulator cover is coupled to the busbar.

11. The battery module according to claim 6,
wherein the busbar unit includes a is provided in plurality of busbar units spaced apart from each other, and
wherein the battery module further includes an interference prevention member located between at least some of the plurality of busbar units to electrically insulate them.

12. The battery module according to claim 1,
wherein the secondary battery is provided in plural,
wherein at least some of the plurality of secondary batteries are configured so that the adjacent electrode leads contact each other, and
wherein at least some of the electrode leads that contact each other contact the support portion.

13. The battery module according to claim 1,
wherein the secondary battery is provided in plural,
wherein the support portion is provided in plural, and
wherein the plurality of support portions are configured to correspond to the electrode lead of each of the plurality of secondary batteries.

14. The battery module according to claim 7,
wherein the coupling member penetrates the electrode lead to couple the busbar and the electrode lead.

15. The battery module according to claim 7,
wherein the support portion is provided in plural,
wherein the battery module further includes an interference prevention member located between at least some adjacent support portions of the plurality of support portions, and
wherein an end of the coupling member is disposed within the interference prevention member.

16. An electronic device comprising:
an electricity production member including an electrode terminal;
an insulator cover located such that the insulator cover faces the electrode terminal; and
a busbar coupled to the insulator cover and configured to be electrically connected to the electrode terminal,
wherein the busbar includes a support portion to support the electrode terminal such that a contact surface with the electrode terminal is parallel to an extension direction of the electricity production member.

17. The electronic device according to claim 16,
wherein the electrode terminal is configured to be supported by the support portion to prevent bending.

18. The electronic device according to claim 16,
wherein the busbar includes an extension portion extending from the support portion in a different direction from an extension direction of the support portion.

19. The electronic device according to claim 16,
wherein the support portion includes a plurality of support portions spaced apart from each other, and
wherein the electronic device further includes an interference prevention member located between at least some of the plurality of support portions to electrically insulate them.

20. A busbar configured to be electrically connected to a plurality of electrode leads, the busbar comprising:
an extension portion extending in a direction; and
a pair of support portions extending from the extension portion in a different direction from the extension direction of the extension portion and spaced apart by a distance corresponding to a distance at which adjacent electrode leads of the plurality of electrode leads are spaced apart so that each of the pair of support portions is connected to each of the adjacent electrode leads.
